# EUROPEAN PATENT SPECIFICATION

(11) **EP 3 413 603 B1**
(45) Date of publication and mention of the grant of the patent: **22.04.2020**
(21) Application number: 17759256.5
(22) Date of filing: 02.03.2017
(51) Int. Cl.: H04W 72/04, H04W 8/18, H04W 72/12

(54) **USER EQUIPMENT CAPABILITY INFORMATION PROCESSING METHOD, USER EQUIPMENT, AND BASE STATION**
VERFAHREN ZUM VERARBEITEN VON ENDGERÄTEFÄHIGKEITSINFORMATIONEN, ENDGERÄT UND BASISSTATION
PROCÉDÉ DE TRAITEMENT D'INFORMATIONS DE CAPABILITÉ D'ÉQUIPEMENT UTILISATEUR, ÉQUIPEMENT UTILISATEUR ET STATION DE BASE

(30) Priority: 04.03.2016 CN 201610124487
(43) Date of publication of application: 12.12.2018
(73) Proprietor: Huawei Technologies Co., Ltd., Longgang District Shenzhen, Guangdong 518129 (CN)
(72) Inventor: ZHANG, Jian, Shenzhen Guangdong 518129 (CN); ZENG, Qinghai, Shenzhen Guangdong 518129 (CN)
(74) Representative: Gill Jennings & Every LLP
(86) International application number: PCT/CN2017/075415
(87) International publication number: WO 2017/148405

(56) References cited:
- EP-A1- 2 879 306
- WO-A1-2010/132296
- WO-A1-2011/087408
- WO-A1-2014/075506
- CN-A- 101 888 665
- CN-A- 104 885 398
- US-A1- 2016 066 316
- HUAWEI (RAPPORTEUR): "Introduction of NB-IoT", 3GPP DRAFT; 36300_CR0844_(REL-13)_R2-161604 36.300 INTRODUCTION OF NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG2, no. St Julian's, Malta; 20160215 - 20160219 19 February 2016 (2016-02-19), XP051066037, Retrieved from the Internet: URL:http://www.3gpp.org/ftp/tsg_ran/WG2_RL 2/TSGR2_93/Docs/ [retrieved on 2016-02-19]
- ERICSSON: "Capabilities of low cost/complexity MTC UEs", 3GPP DRAFT; R2-134299 - CAPABILITIES OF LOW COST COMPLEXITY MTC UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. San Francisco, USA; 20131111 - 20131115 13 November 2013 (2013-11-13), XP050737032, Retrieved from the Internet: URL:http://www.3gpp.org/ftp/Meetings_3GPP_ SYNC/RAN/RAN2/Docs/ [retrieved on 2013-11-13]

## Description

### TECHNICAL FIELD

This application relates to the communications field, and in particular, to a method for processing capability information of user equipment, user equipment, and a base station in the communications field.

### BACKGROUND

An air interface ("AI" for short) technology is also referred to as a radio interface technology ("RIT" for short), and radio interface protocols ("RIP" for short) used in the air interface technology usually include aspects such as a multiple access ("MA" for short) manner, a modulation and coding scheme ("MCS" for short), a frame structure ("FS" for short), a physical channel ("PC" for short), a transport channel (TC" for short), a logical channel ("LC" for short), Media Access Control ("MAC" for short), Radio Link Control ("RLC" for short), Packet Data Convergence Protocol ("PDCP" for short), and Radio Resource Control ("RRC" for short). To support different services whose quality of service ("QoS" for short) requirements or radio condition requirements are greatly different on a same carrier, use of a frequency division manner can provide more flexible and efficient radio resource utilization, and can dynamically adjust occupancy of these services for radio resources more flexibly based on requirements of different services on bandwidth. However, a conventional wireless communications system supports only one radio interface technology on one carrier. When different radio interface technologies are needed to better support QoS requirements of different services and better adapt to a change in a radio condition of a user, different carriers need to be used, or radio resources on a same carrier need to be used in a time division manner in the prior art. A radio resource use manner is inflexible, and consequently it is difficult to perform dynamic adjustment based on a status of requirements of different services on the radio resources. EP 2 879 306 relates to method of supporting communication using two or more radio access technologies and apparatus for same. WO 2010/132296 relates to system and method for resolving conflicts between air interfaces in a wireless communication system. ERICSSON: "Capabilities of low cost/complexity MTC UEs", 3GPP DRAFT; R2-134299- CAPABILITIES OF LOW COST COMPLEXITY MTC UES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE; vol. RAN WG2, no. San Francisco, USA; 20131111 - 20131115 13 November 2013 relates to capabilities of low cost/complexity MTC UEs.

### SUMMARY

In view of this, aspects of this application provide a method for processing capability information of user equipment, to resolve a problem that a radio resource use manner cannot flexibly adapt to dynamic requirements of a service and a radio condition.

The invention is defined in the claims. According to a first aspect, the scheduling, by the base station, the UE may include flexibly allocating, by the base station, a radio resource to the UE between a plurality of air interfaces.

Therefore, the method described in this application resolves a problem that a radio resource use manner cannot flexibly adapt to dynamic requirements of a service and a radio condition, so that the UE can support a plurality of different air interface types on a same carrier, to more flexibly adapt to the dynamic requirements of the service and the radio condition.

In accordance with one implementation, the UE independently determines the target capability information, so that the base station may flexibly allocate a resource to the UE between a plurality of air interface types more flexibly based on the target capability information of the UE, to more flexibly adapt to the dynamic requirements of the service and the radio condition.

The total capability information value of the UE is a sum of capability information corresponding to all of the air interface types that the UE can simultaneously configure or run, and the sum of the capability information may indicate a maximum capability information value that the UE can support, for example, a maximum bandwidth that the UE can provide to these air interface types, a maximum spatial multiplexing layer quantity that the UE can support, or a maximum transmit power that the UE can have.

It should be noted that, the sum of the capability information corresponding to all of the air interface types supported by the UE may exceed the total capability information value of the UE, but a sum of capability information corresponding to all of air interface types that the UE simultaneously configures or simultaneously runs within a TTI cannot exceed the total capability information value of the UE. When the UE configures or runs only one air interface type, the air interface type exclusively occupies the total capability information value.

The scheduling, by the base station, the UE may include flexibly allocating, by the base station, a radio resource to the UE between a plurality of air interfaces.

Therefore, the method described in this application resolves a problem that a radio resource use manner cannot flexibly adapt to dynamic requirements of a service and a radio condition, so that the UE can support a plurality of different air interface types on a same carrier, to more flexibly adapt to the dynamic requirements of the service and the radio condition.

In accordance with one implementation, by processing the air interface capability information of the UE, the base station may flexibly allocate a resource to the UE between a plurality of air interface types more flexibly based on the capability information of the UE, to more flexibly adapt to the dynamic requirements of the service and the radio condition.

The total capability information value of the UE is a sum of capability information corresponding to all of the air interface types that the UE can simultaneously configure or run, and the sum of the capability information may indicate a maximum capability information value that the UE can support, for example, a maximum bandwidth that the UE can provide to these air interface types, a maximum spatial multiplexing layer quantity that the UE can support, or a maximum transmit power that the UE can have.

In this way, the base station sends the determined target capability information to an MME for storage, so that the base station may obtain the target capability information from the MME or the UE based on a network status, thereby flexibly allocating a resource to the UE between a plurality of air interface types, and improving efficiency of scheduling the UE by the base station.

The capability information described in this application includes at least one of the following: a total quantity of uplink or downlink transport block bits within each TTI, a quantity of uplink or downlink spatial multiplexing layers of the UE, a quantity of soft channel bits of the UE within each TTI, a maximum modulation order supported by the UE, a total layer 2 buffer size of the UE, a physical layer parameter, a radio frequency parameter, and a maximum transmit power of the UE. Additionally, the air interface type described in this application may be determined based on at least one of the following parameters: a multiple access manner, a frame structure, a cyclic prefix length, a hybrid automatic repeat request round trip time, a subcarrier width, a physical channel, an uplink subframe configuration, a downlink subframe configuration, and the like. That is, the air interface type may be indicated by a combination of the foregoing parameters, and different air interface types are different in at least one of the foregoing parameters.

Based on the foregoing technical solutions, the method for processing capability information of user equipment in the aspects of this application resolves the problem that a radio resource use manner cannot flexibly adapt to dynamic requirements of a service and a radio condition. The air interface capability information of the UE is processed, so that the UE may support a plurality of different air interface types on a same carrier, and therefore the base station may flexibly allocate a resource to the UE between a plurality of air interface types more flexibly based on the capability information of the UE, to more flexibly adapt to the dynamic requirements of the service and the radio condition.

### BRIEF DESCRIPTION OF DRAWINGS

FIG. 1 is a schematic diagram of an application scenario according to an aspect of this application;
FIG. 2 is an adaptive flowchart of a method for processing capability information of user equipment according to an aspect of this application;
FIG. 3 is an adaptive flowchart of a method for processing capability information of user equipment according to another aspect of this application;
FIG. 4 is a process interaction diagram of a method for processing capability information of user equipment according to an aspect of this application;
FIG. 5 is a process interaction diagram of a method for processing capability information of user equipment according to another aspect of this application;
FIG. 6 is a schematic structural block diagram of user equipment according to an aspect of this application;
FIG. 7 is a schematic structural block diagram of a base station according to an aspect of this application;
FIG. 8 is a schematic structural block diagram of user equipment according to an aspect of this application;
FIG. 9 is a schematic structural block diagram of a base station according to an aspect of this application;
FIG. 10 is a schematic structural diagram of a communications system according to an aspect of this application;
FIG. 11 is a schematic structural diagram of a communications system according to another aspect of this application;
FIG. 12 is a schematic structural diagram of a system chip according to an aspect of this application; and
FIG. 13 is a schematic structural diagram of a system chip according to another aspect of this application.

### DESCRIPTION OF ASPECTS

It should be understood that, the technical solutions of the aspects of this application may be applied to various communications systems, such as: a Global System of Mobile Communications ("GSM" for short) system, a Code Division Multiple Access ("CDMA" for short) system, a Wideband Code Division Multiple Access ("WCDMA" for short) system, a general packet radio service ("GPRS" for short), a Long Term Evolution ("LTE" for short) system, an LTE frequency division duplex ("FDD" for short) system, an LTE time division duplex ("TDD" for short), a Universal Mobile Telecommunications System ("UMTS" for short), a Worldwide Interoperability for Microwave Access ("WiMAX" for short), a wireless local area network ("WLAN" for short) communications system, a future fifth generation (5G) wireless communications system, or the like. The aspects of this application are described by using an LTE communications system as an example.

It should also be understood that in the aspects of this application, user equipment (UE for short) may be referred to as a terminal, a mobile station (MS for short), a mobile terminal, and the like. The user equipment may communicate with one or more core networks through a radio access network (RAN for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network.

In the aspects of this application, a base station may be a base station (BTS for short) in GSM or CDMA, or may be a base station (NodeB, NB for short) in WCDMA, or may be an evolved NodeB (Evolved Node B, "eNB" or "e-NodeB" for short) in LTE. This is not limited in this application. However, for ease of description, the following aspects are described by using an eNB as an example.

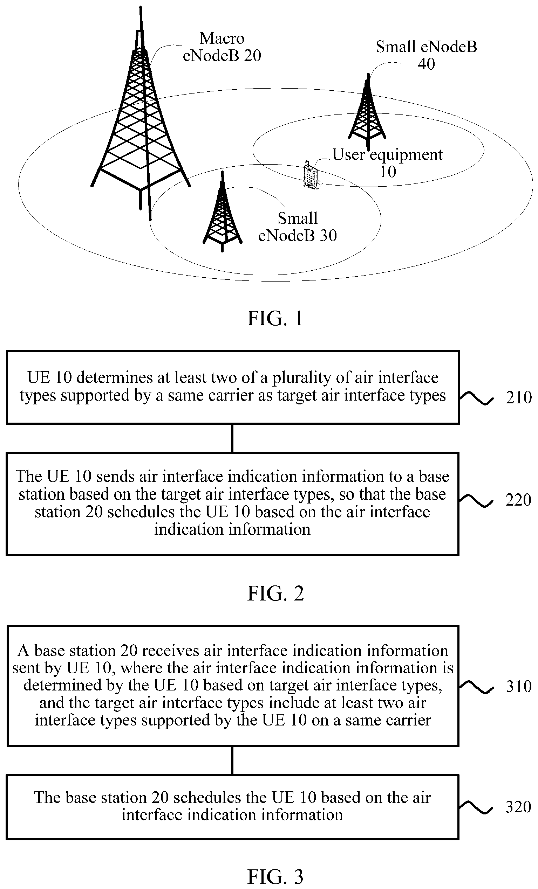

FIG. 1 is a schematic diagram of an application scenario according to an aspect of this application. As shown in FIG. 1, a basic network architecture of an LTE communications system may include, for example, UE 10, a macro eNodeB 20, a small eNodeB 30, and a small eNodeB 40. The UE 10 is located within coverage of one or more cells (that may be understood as carriers) provided by the macro eNodeB 20, the small eNodeB 30, or the small eNodeB 40, and one or more cells may serve the UE 10. When a plurality of cells serve the UE 10, the UE 10 may operate in a manner such as carrier aggregation ("CA" for short), dual connectivity ("DC" for short), or coordinated multipoint transmission ("CoMP" for short), where a carrier in CA is provided by at least one base station, at least one cell provides at least one air interface technology AI, and one or more AIs in the at least one air interface technology may be configured for the UE 10. This aspect of this application is described by using an example in which three AIs are provided to the UE 10 within one cell. It should be understood that, a method described in this aspect of this application is also applicable to a case in which two or more than three AIs are provided to the UE 10 within one cell.

Based on the application scenario of this aspect of this application described in FIG. 1, a plurality of radio interfaces AI are provided to the UE 10 on a same carrier, different AIs occupy different frequency ranges on the carrier in a frequency division manner, or occupy a same frequency range on the carrier in a time division manner, or the foregoing two manners are combined. For example, there is an overlapping area on a frequency range, but time division is performed in the overlapping area. This is not limited in the method described in this aspect of this application.

In the prior art, because a plurality of different air interface technologies cannot be all supported on a same carrier, only a time division method can be used, or different carriers are used to support different radio interface technologies. A same radio interface technology on a carrier supports services of various quality of service, for example, supports a guaranteed bit rate (Guaranteed Bit Rate, "GBR" for short) service and a non-guaranteed bit rate service (Non-GBR). A same radio interface may be used on a same carrier to support both a mobile broadband (Mobile Broad Band, "MBB" for short) service and a machine to machine communication (Machine to Machine, "M2M" for short) service. Some optimized solutions may be used for M2M communication. For example, an extended access barring (Extended Access Barring, "EAB" for short) mechanism is introduced in an M2M service tolerating a delay, so that some M2M terminals are temporarily prevented from access during network congestion or overload.

For another example, for such a special service as multimedia broadcast multicast service (Multimedia Broadcast Multicast Service, "MBMS" for short), if a conventional wireless communications system needs to support both an MBMS service and support a normal unicast (Unicast) service in a time division manner on a same carrier, only a time division method can be used, or different carriers are used to support different radio interface technologies. For example, in an LTE system, some dedicated multimedia broadcast multicast single frequency network (Multimedia Broadcast Multicast Single Frequency Network, "MBMSFN" for short) subframes are configured for an MBMS service on a same carrier, and remaining subframes are used to receive LTE system information, service information, and the like. An LTE frame format used by a subframe occupied by a unicast service and that used by a subframe occupied by an MBMS service are slightly different in parameters. For example, a CP length of an orthogonal frequency division multiplexing (Orthogonal Frequency Division Multiplexing, "OFDM" for short) symbol of an MBMS subframe is greater than a CP length of a unicast service subframe, to resolve an inter-symbol interference ("ISI" for short) problem caused by a larger delay spread of a multi-cell single frequency network transmission manner of the MBMS service.

However, if different services whose QoS requirements and/or radio condition requirements are greatly different need to be supported on a same carrier, use of a frequency division manner can provide more flexible and efficient radio resource utilization, and dynamically adjust occupancy of these services for radio resources more flexibly based on requirements of different services on bandwidth. For example, for a scenario in which an M2M service having an ultra-low delay requirement (for example, a delay requirement is less than 1 ms) and a unicast service coexist on a same carrier, the M2M service and the mobile broadband (MBB, mobile broadband) unicast service may use different radio interface technologies. For example, multiple access manners, frame formats, physical layer parameters, and even physical channels may be set differently. The prior art does not support an MBMS service and a unicast service to use a radio resource in a frequency division manner on a same carrier. Therefore, the method described in this aspect of this application is introduced, to support different radio interface technologies in a frequency division manner on a same carrier, thereby dynamically adjusting radio resource allocation more flexibly based on a status of requirements of different services on radio resources and improving radio resource utilization.

To support a flexible air interface carrier, the UE 10 needs a corresponding flexible air interface supporting capability. Therefore, a problem of processing capability information of the UE 10 for a flexible air interface needs to be resolved. The flexible air interface carrier may also provide support for conventional user equipment in the prior art, for example, provide a backward compatible frequency range. For the conventional user equipment, capability information of the user equipment may be processed based on a method in the prior art.

The capability information of the user equipment is used to represent a capability of a terminal, and the capability includes two parts: One part is radio capability information (Radio Capability Information) of the user equipment, and the other part is network capability information (Network Capability Information). The radio capability information of the UE 10 includes a status of a radio access technology supported by the UE 10, for example, a power class (Power Class) of the UE 10 and a frequency band supported by the UE 10. The network capability information of the UE 10 is relatively some radio unrelated capability information such as a non-access stratum ("NAS" for short) encryption algorithm supporting status of the UE 10. Capability sets of the UE 10 are graded because hardware designs of different user equipments are different from each other and signal processing capabilities are different.

When the UE 10 establishes a Radio Resource Control (Radio Resource Control, "RRC" for short) connection to the base station 20, the UE 10 needs to report radio access capability (Radio Access Capability) information of the UE 10 to a network, and the base station 20 needs to schedule the UE 10 based on the radio access capability of the UE 10. The base station 20 may obtain the capability information from a mobility management entity (Mobility Management Entity, "MME" for short) or the UE 10.

FIG. 2 is an adaptive flowchart of a method for processing capability information of user equipment according to an aspect of this application. The method for processing capability information of user equipment shown in FIG. 2 is performed by UE 10, and includes the following steps.

210. The UE 10 determines at least two of a plurality of air interface types supported by a same carrier as target air interface types.

220. The UE 10 sends air interface indication information to a base station based on the target air interface types, so that the base station 20 schedules the UE 10 based on the air interface indication information.

FIG. 3 is an adaptive flowchart of a method for processing capability information of user equipment according to another aspect of this application. The method for processing capability information of user equipment shown in FIG. 3 is performed by a base station 20, and includes the following steps. 310. The base station 20 receives air interface indication information sent by UE 10, where the air interface indication information is determined by the UE 10 based on target air interface types, and the target air interface types include at least two air interface types supported by the UE 10 on a same carrier.

320. The base station 20 schedules the UE 10 based on the air interface indication information.

Therefore, by using the method described in this aspect of this application, the UE 10 may support different air interface types to use a radio resource on a same cell by in a frequency division manner. Therefore, the capability information of the UE 10 may be flexibly allocated between a plurality of air interface types, so that the UE 10 may more flexibly adapt to dynamic requirements of a service and a radio condition.

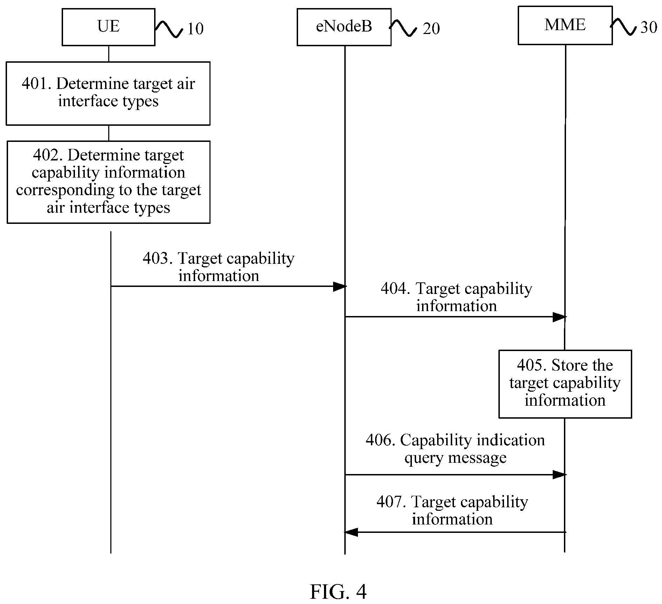

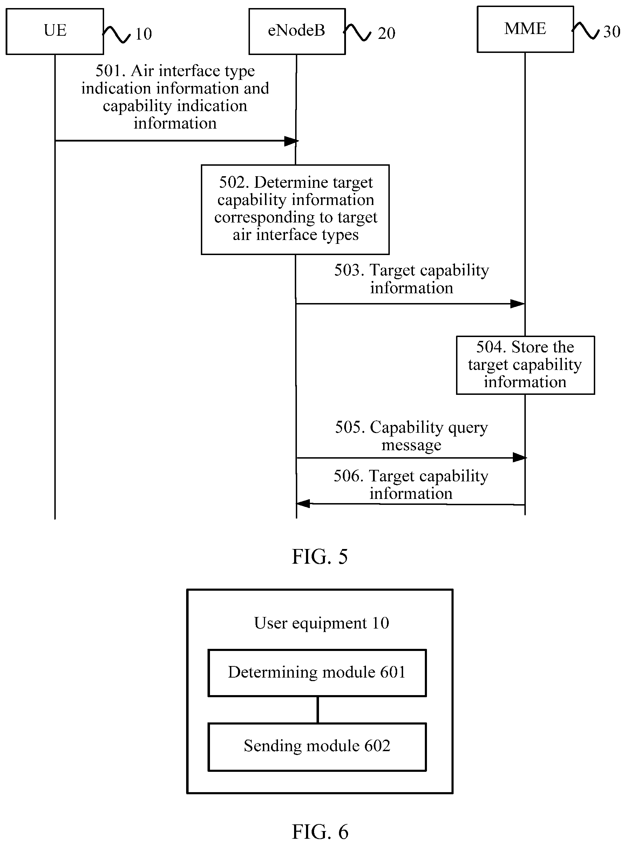

Based on the method for processing capability information of user equipment in FIG. 2 or FIG. 3, for more detailed aspects, refer to the following descriptions in FIG. 4 and FIG. 5.

FIG. 4 is a process interaction diagram of a method for processing capability information of user equipment according to an aspect of this application. FIG. 4 shows UE 10, a macro eNodeB 20, and a mobility management entity ("MME" for short) 30. The macro eNodeB 20 is briefly referred to as a base station (eNodeB) 20 below. The UE 10 supports a plurality of air interface types on a same carrier, and different air interface types correspond to different radio interface technologies. As shown in FIG. 4, a specific process of the method for processing capability information of user equipment is as follows:
401. The UE 10 determines target air interface types.

The target air interface types include at least two air interface types, and the at least two air interface types are located on a same carrier.

For example, if M air interface types are supported on a same carrier of the UE 10, in 401, N of the M air interface types may be determined as target air interface types, where M≥2, and 2≤N≤M.

It should be understood that, an air interface type of the UE 10 may be determined based on at least one of the following parameters: a multiple access manner, a frame structure, a cyclic prefix ("CP" for short) length, a hybrid automatic repeat request ("HARQ" for short) round trip time ("RTT" for short), a subcarrier width, and a physical channel, and an uplink subframe configuration, a downlink subframe configuration, and the like are further included for a TDD system. That is, the air interface type may be indicated by a combination of the foregoing parameters, and different air interface types are different in at least one of the foregoing parameters. It should be further understood that, this aspect of this application includes, but is not limited to, the foregoing parameters, and may further include, for example, a physical layer parameter, a radio frequency parameter, a packet aggregation protocol layer parameter, a Radio Link Control layer parameter, and a duplex mode.

It should be further understood that, the air interface type may be identified by using an air interface name, identification information, and the like. For example, air interface index information is used as identification information.

The multiple access manner may include an orthogonal frequency division multiple access (Orthogonal Frequency Division Multiple Access, "OFDMA" for short) manner, a sparse code multiple access (Sparse Code Multiple Access, "SCMA" for short) manner, and the like. The frame structure may include a supported minimum TTI length that is 0.1 ms, 0.2 ms, or the like, and a supported maximum TTI length that is 1 ms, 2 ms, or the like. The subcarrier width may include a minimum subcarrier width that is 7.5 KHz, 15 KHz, or the like, and a maximum subcarrier width that is 150 KHz, 300 KHz, or the like.

To simplify description, two air interface types (that is, N=2) are used herein as an example to perform description, and the two air interface types respectively use different radio interface technologies. For example, an OFDM modulation technology may be used as either of two radio interface technologies, where one radio interface technology is optimized for a massive-connection M2M service, for example, a sparse code multiple access (Sparse Code Multiple Access, "SCMA" for short) technology is introduced, and an LTE radio interface technology in the prior art is used as the other radio interface technology. In the SCMA technology, by performing non-orthogonal spreading and superposition in code domain, in a case of a same resource quantity, more service users are accommodated, so that a total throughput of a network is increased under the premise that user experience is not affected. Similar to CDMA, in SCMA, an information transmission rate of a multi-carrier system is increased in a code word spreading manner in frequency domain, that is, a plurality of code words are allowed to be superposed on one system resource block and transmitted. For another example, in the two radio interface technologies, one radio interface technology is optimized for an ultra-low delay M2M service, a frame structure different from that used for LTE in the prior art is used. For example, a subframe (subframe) length of 0.1 ms is used, and a subframe length of an LTE frame structure is 1 ms. An LTE radio interface technology in the prior art is used as the other radio interface technology.

For another example, in the two radio interface technologies, two radio interfaces use a same frame structure, but HARQ RTTs of the two radio interfaces may be different. For example, a HARQ RTT of one of the radio interface technologies is four TTIs, and a HARQ RTT of the other radio interface is eight TTIs.

For another example, the two radio interface technologies are respectively a radio interface technology used for a unicast service and a radio interface technology used for an MBMS service in conventional LTE radio interface technologies. To resolve interference between frequency ranges that is caused by frequency division of different radio interface technologies, a filtering technology may be used at different frequency ranges, for example, a conventional technology such as filtered OFDM, filter band multi-carrier ("FBMC" for short), or generalized frequency division multiplexing ("GFDM" for short).

402. The UE 10 determines target capability information corresponding to the target air interface types.

Specifically, in 402, at least two pieces of capability information in a one-to-one correspondence with the at least two air interface types are determined. That is, the target capability information is the at least two pieces of capability information in the one-to-one correspondence with the at least two air interface types included in the target air interface types, and the target air interface types are in a one-to-one correspondence with the target capability information.

Optionally, in another aspect, the UE 10 determines the target capability information corresponding to the target air interface types based on a maximum quantity of air interface types that the UE 10 is capable of simultaneously configuring or simultaneously running and a total capability information value of the UE 10.

The total capability information value of the UE 10 is a sum of capability information corresponding to all of the air interface types that the UE 10 can simultaneously configure or run, and the sum of the capability information may indicate a maximum capability information value that the UE 10 can support, for example, a maximum bandwidth that the UE 10 can provide to these air interface types, a maximum spatial multiplexing layer quantity that the UE 10 can support, or a maximum transmit power that the UE 10 can have.

A quantity of the target air interface types is less than or equal to the maximum quantity of air interface types that the UE 10 is capable of simultaneously configuring or simultaneously running. For example, if the maximum quantity of air interface types that the UE is capable of simultaneously configuring or simultaneously running is P, N≤P should be satisfied. Moreover, usually, P≤M. For example, M=10, P=3, and N=2. This is not limited in this application.

It should be understood that, the capability information mentioned herein includes any one of the following: a total quantity of uplink or downlink transport block bits within each TTI, a quantity of uplink or downlink spatial multiplexing layers of the UE 10, a quantity of soft channel bits of the UE 10 within each TTI, a maximum modulation order supported by the UE 10, a total layer 2 buffer size of the UE 10, a physical layer parameter, a radio frequency parameter, and a maximum transmit power of the UE 10. This aspect of this application includes, but is not limited to, the foregoing parameters.

It should be noted that, the sum of the capability information corresponding to all of the air interface types supported by the UE 10 may exceed the total capability information value of the UE 10, but a sum of capability information corresponding to all of air interface types that the UE 10 simultaneously configures or simultaneously runs within a TTI cannot exceed the total capability information value of the UE 10. When the UE 10 configures or runs only one air interface type, the air interface type exclusively occupies the total capability information value.

It should be further noted that, the maximum quantity of air interface types that the UE 10 simultaneously configures or simultaneously runs does not exceed a quantity of all air interface types supported by the UE.

For example, the UE 10 may allocate, to each air interface type based on a total quantity of layers that can be multiplexed in uplink or downlink space, a quantity of uplink or downlink spatial multiplexing layers possessed by each air interface type; and the UE 10 may further allocate, to each air interface type based on the maximum modulation order that the UE 10 can support, a maximum modulation order that can be used by each air interface type.

For another example, the UE 10 may further allocate physical layer parameter information to each air interface type of the target air interface types, that is, downlink and uplink multi-input multi-output capability information supported by the UE 10. When the UE 10 simultaneously configures or simultaneously runs a plurality of air interface types, the downlink and uplink multi-input multi-output capability information indicates a sum of maximum spatial multiplexing layer quantities supported by the plurality of air interface types on a frequency band, or indicates a maximum spatial multiplexing layer quantity supported by any air interface type.

For another example, the UE 10 may further allocate radio frequency parameter information to each air interface type of the target air interface types, that is, frequency band combination information supported by the UE 10. When the UE 10 simultaneously configures or simultaneously runs a plurality of air interface types, it indicates frequency bands supported by the plurality of air interface types and combination information of maximum spatial multiplexing layer quantities supported by the plurality of air interface types, or indicates a frequency band supported by one of the air interface types and combination information of a maximum spatial multiplexing layer quantity supported by the one of the air interface types.

Optionally, in another aspect, the UE 10 may averagely allocate the total capability information value of the UE 10 based on the maximum quantity of air interface types that the UE 10 is capable of simultaneously configuring or simultaneously running, and determine a capability information value obtained after the average allocation as the target capability information corresponding to each air interface type of the target air interface types.

For example, if a total capability information value of the UE 10 is 1 and a maximum quantity of air interface types that the UE 10 is capable of simultaneously configuring or simultaneously running is 4, a capability information value obtained after the average allocation is 0.25, and therefore 0.25 is used as capability information of each air interface type of the target air interface types. If capability information allocated by the UE 10 to the target air interface types is maximum transmit power information, a transmit power allocated by the UE 10 on each air interface type of the target air interface types accounts for 0.25.

Optionally, in another aspect, the UE 10 may further allocate corresponding target capability information to each air interface type of the target air interface types based on the maximum quantity of air interface types that the UE 10 is capable of simultaneously configuring or simultaneously running, the total capability information value of the UE 10, and at least one of the following information:
adaptive change information of each air interface type, a radio resource occupied by each air interface type within each transmission time interval TTI, and a capability requirement value of each air interface type.

The adaptive change information is used to indicate whether each air interface type supports a dynamic capability information configuration and/or a semi-static capability information configuration.

For example, if a total capability information value of the UE 10 is 1 and a maximum quantity of air interface types that the UE 10 is capable of simultaneously configuring or simultaneously running is 3, it may be set that when an air interface type of the UE 10 supports the dynamic capability information configuration, capability information allocated by the UE 10 to the air interface type is 0.5; when an air interface type of the UE 10 supports the semi-static capability information configuration, capability information allocated by the UE 10 to the air interface type is 0.2; or when an air interface type of the UE 10 supports both the dynamic capability information configuration and the semi-static capability information configuration, capability information allocated by the UE 10 to the air interface type is 0.3. Therefore, the UE 10 may allocate corresponding target capability information to each air interface type based on the adaptive change information of each air interface type of the target air interface types.

For another example, the UE 10 may also allocate a total quantity of uplink or downlink transport block bits within each TTI to each air interface type based on a bandwidth occupied by each air interface type of the target air interface types; the UE 10 may further allocate a quantity of soft channel bits within each TTI to each air interface type based on a bandwidth occupied by each air interface type; and the UE 10 may further allocate a total layer 2 buffer size to each air interface type based on a bandwidth occupied by each air interface type.

For another example, the UE 10 may further consider a capability requirement value of each air interface type, and the capability requirement value indicates an inherent requirement of the target air interface types on the capability. Different air interface types may have different requirements for different capability information. Therefore, for a piece of capability information, if a target air interface has a relatively high requirement on the capability information, a relatively high proportion of the capability information of a total capability information value of the capability may be allocated to the target air interface; or if a target air interface has a relatively low requirement on the capability information, a slightly low proportion of the capability information of a total capability information value of the capability may be allocated to the target air interface. Optionally, the UE 10 may determine, based on a quantity of target air interface types determined each time, and a total capability information value of the UE 10, target capability information corresponding to the target air interface types. Therefore, when the target air interface types are changed, the UE 10 needs to flexibly adjust capability information corresponding to the target air interface types.

Optionally, based on the method for processing capability information of the UE 10 described in this aspect of this application, before the UE 10 determines the target air interface types and the capability information corresponding to the target air interface types, air interface types supported by the UE 10 may be further categorized based on parameters included in the capability information. For example, air interface types supporting an orthogonal frequency division multiple access technology are used as a category, air interface types supporting a sparse code multiple access technology are used as a category, and then each category of air interface types is operated in the foregoing manner. Therefore, it is convenient for the UE 10 to search for and determine a target air interface type.

Optionally, the target air interface types sent by the UE 10 to the base station 20 may be sent based on an indication of the base station 20. For example, the base station 20 may send capability query information to the UE 10, and the capability query information is used to instruct the UE 10 to send the target air interface types. For example, the base station 20 may be designated to obtain capability information corresponding to a first air interface type and a second air interface type from the UE 10, or capability information corresponding to all air interface types supported by the UE 10.

Additionally, although the UE 10 supports a plurality of air interface types on a same carrier, a quantity of the target air interface types sent by the UE 10 to the base station 20 may be at least two of the plurality of air interface types or one of the plurality of air interface types. For example, when there is only one air interface type that the UE 10 is about to run, capability information corresponding to only the air interface type may be sent to the base station 20. This is not limited in this application.

Optionally, the UE 10 may not allocate capability information to the target air interface types based on a maximum quantity of air interface types that can be simultaneously configured or simultaneously run, but instead, capability information corresponding to each air interface type is defined for each air interface type of the target air interface types based on a parameter characteristic of each air interface type of the target air interface types, costs of the UE 10, a network condition, and the like. For example, the UE 10 defines a maximum downlink or uplink transport block bit quantity within each TTI for each air interface type of the target air interface types; the UE 10 defines a maximum downlink spatial multiplexing layer quantity for each air interface type of the target air interface types; the UE 10 defines a quantity of soft channel bits within each TTI for each air interface type of the target air interface types; the UE 10 defines a maximum layer 2 buffer size for each air interface type of the target air interface types; or the UE 10 defines define maximum transmit power information of the UE 10 and the like for each air interface type of the target air interface types.

It should be noted that, the sum of the capability information of all of the air interface types supported by the UE 10 may exceed the total capability information value of the UE 10, but it needs to be ensured that a sum of capability information corresponding to all of air interface types that the UE 10 simultaneously configures or simultaneously runs within a TTI cannot exceed the total capability information value of the UE 10.

403. The UE 10 sends the target capability information corresponding to the target air interface types to the base station 20.

Specifically, the UE 10 may send target capability information corresponding to each air interface type of the determined target air interface types to the base station 20, so that the base station 20 schedules the UE 10 based on the target capability information. The scheduling, by the base station 20, the UE 10 may include flexibly allocating, by the base station 20, a radio resource to the UE 10 between a plurality of air interfaces.

Optionally, after 403, the method may further include 404 and 405.

404. The base station 20 sends the target capability information corresponding to the target air interface types to the MME 30.

Specifically, the base station 20 may further send the target capability information corresponding to the target air interface types to the MME 30, so that the MME 30 stores the target capability information performing, and subsequently the base station 20 may directly obtain capability information corresponding to each air interface type from the MME 30, that is, may obtain the target capability information corresponding to the target air interface types by performing 406 and 407.

It should be noted that, the base station 20 may send the target capability information corresponding to the target air interface types to at least two mobility management entities. The at least two MMEs are in a one-to-one correspondence with the at least two target air interface types. The MME 30 included in a plurality of MMEs is used as an example herein to perform description.

405. The MME 30 stores the target capability information corresponding to the target air interface types.

Specifically, after receiving a capability indication information of the UE 10, the base station 20 may further respectively send the target capability information corresponding to the target air interface types of the UE 10 to different mobility management entities for storage. Using the MME 30 as an example, the base station 20 may directly obtain the target capability information of the target air interface types corresponding to the UE 10 from the MME 30 by sending capability query information to the MME 30, that is, may perform 406 and 407; If the MME 30 does not store the target capability information of the target air interface types requested by the base station 20, the base station 20 obtains the target capability information of the target air interface types of the UE 10 from the UE 10 again, and notifies the target capability information to the MME 30 for storage. That is, for different air interface types, the UE 10 establishes services by using different mobility management entities, the base station 20 stores a mapping relationship between an air interface type and a mobility management entity, and when needing capability information of a corresponding air interface type, the base station 20 may respectively obtain corresponding capability information of the UE 10 from different mobility management entities.

406. The base station 20 sends a capability query message to the MME 30.

The capability query message is used to query the target capability information corresponding to the target air interface types.

Specifically, after receiving the target capability information corresponding to the target air interface types sent by the UE 10, the base station 20 may further respectively send the target capability information to different mobility management entities for storage. Using the MME 30 as an example, the base station 20 may directly obtain the target capability information of the target air interface types corresponding to the UE 10 from the MME 30 by sending capability query information to the MME 30. If the MME 30 does not store the target capability information corresponding to the target air interface types requested by the base station 20, the base station 20 determines the target capability information corresponding to the target air interface types again.

407. The base station 20 receives the target capability information corresponding to the target air interface types sent by the MME 30.

Specifically, when the UE 10 needs to configure or run the target air interface types, the UE 10 accesses the base station 20 from a Radio Resource Control (Radio Resource Control, "RRC" for short) idle (idle) state, the UE 10 performs a Radio Resource Control connection re-establishment (RRC connection re-establishment) process to access the base station 20, or the UE 10 performs handover (handover) to the base station 20, the base station 20 may directly obtain the target capability information corresponding to the target air interface types from the MME 30.

Therefore, by using the method described in this aspect of this application, different air interface types supported by the UE 10 use a radio resource on a same cell in a frequency division manner, the UE may independently determine target capability information, and the base station 20 may obtain capability information corresponding to the different air interface types supported by the UE 10, thereby flexibly allocating a resource to the UE 10 between a plurality of air interface types based on the capability information of the UE 10 more flexibly, so as to more flexibly adapt to dynamic requirements of a service and a radio condition.

A process in which the UE 10 determines the target capability information corresponding to the target air interface types is described above, and a process in which the base station 20 determines the target capability information corresponding to the target air interface types is described below with reference to FIG. 5. The UE 10 may also notify information about a target air interface type to the base station 20, and the base station 20 allocates corresponding target capability information to the target air interface type, thereby properly scheduling the UE based on the target capability information corresponding to the target air interface type.

FIG. 5 is a process interaction diagram of a method for processing capability information of user equipment according to another aspect of this application. FIG. 5 shows UE 10, an eNodeB 20, and an MME 30. The UE 10 supports a plurality of air interface types on a same carrier, and different air interface types correspond to different radio interface technologies. As shown in FIG. 5, a specific process of the method for processing capability information of user equipment is as follows:
501. The UE 10 sends target air interface type indication information and capability indication information to the base station 20.

Specifically, the UE 10 determines at least two of a plurality of air interface types supported on a same carrier as target air interface types, and sends, to the base station 20, the target air interface type indication information used to indicate the target air interface types.

For example, if M air interface types are supported on a same carrier of the UE 10, the UE 10 may determine N of the M air interface types as target air interface types, where M≥2, and 2≤N≤M.

Specifically, the UE 10 determines, based on a to-be-processed service, target air interface types to be configured or run, and sends information related to the target air interface types to the base station 20. The base station 20 receives the target air interface types sent by the UE 10, and receives capability indication information sent by the UE, where the capability indication information is used to indicate a maximum quantity of air interface types that the UE 10 is capable of simultaneously configuring or simultaneously running, and a total capability information value of the UE 10.

It should be understood that, in 501, the target air interface types and the capability indication information may be simultaneously sent, or the UE 10 may first send the target air interface types to the base station 20 and then send the capability indication information. This is not limited in this application.

502. The base station 20 determines target capability information corresponding to the target air interface types.

Specifically, in 502, the base station 20 determines at least two pieces of capability information in a one-to-one correspondence with the at least two air interface types. That is, the at least two pieces of capability information are the target capability information, and the target capability information corresponds to the target air interface types.

In another aspect, after receiving the target air interface types and the capability indication information that are sent by the UE 10, the base station 20 may determine, based on the maximum quantity of air interface types that the UE 10 is capable of simultaneously configuring or simultaneously running, and the total capability information value of the UE 10, the target capability information corresponding to the target air interface types.

A quantity of the target air interface types is less than or equal to the maximum quantity of air interface types that the UE 10 is capable of simultaneously configuring or simultaneously running. For example, if the maximum quantity of air interface types that the UE is capable of simultaneously configuring or simultaneously running is P, N≤P should be satisfied. Moreover, usually, P≤M. For example, M=10, P=3, and N=2. This is not limited in this application.

It should be noted that, the sum of the capability information corresponding to all of the air interface types supported by the UE 10 may exceed the total capability information value of the UE 10, but a sum of capability information corresponding to all of air interface types that the UE 10 simultaneously configures or simultaneously runs within a TTI cannot exceed the total capability information value of the UE 10. When the UE 10 configures or runs only one air interface type, the air interface type exclusively occupies the total capability information value.

It should be further noted that, the maximum quantity of air interface types that the UE 10 simultaneously configures or simultaneously runs does not exceed a quantity of all air interface types supported by the UE.

Optionally, the base station 20 may averagely allocate the total capability information value of the UE 10 based on the maximum quantity of air interface types that the UE 10 is capable of simultaneously configuring or simultaneously running, and determine a capability information value obtained after the average allocation as the target capability information corresponding to each air interface type of the target air interface types.

In another aspect, the base station 20 may further allocate corresponding target capability information to each air interface type of the target air interface types based on the maximum quantity of air interface types that the UE 10 is capable of simultaneously configuring or simultaneously running, the total capability information value of the UE 10, and at least one of the following information:
adaptive change information of each air interface type, a radio resource occupied by each air interface type within each transmission time interval TTI, and a capability requirement value of each air interface type.

The adaptive change information is used to indicate whether each air interface type supports a dynamic capability information configuration and/or a semi-static capability information configuration.

Optionally, the base station 20 may determine, based on a quantity of target air interface types determined by the UE 10 each time, and a total capability information value of the UE 10, target capability information corresponding to the target air interface types. Therefore, when the target air interface types are changed, the UE 10 needs to flexibly adjust capability information corresponding to the target air interface types.

It should be understood that, the target air interface types sent by the UE 10 to the base station 20 may be sent based on an indication of the base station 20. For example, the base station 20 may be designated to obtain capability information corresponding to a first air interface type and a second air interface type that are, or capability information corresponding to all air interface types supported by the UE 10.

Additionally, although the UE 10 supports a plurality of air interface types on a same carrier, there may be one or more target air interface types sent by the UE 10 to the base station 20. For example, when there is only one air interface type that the UE 10 is about to run, information about only the air interface type may be sent to the base station 20. This is not limited in this application. Optionally, the base station 20 may not allocate capability information to the target air interface types based on a maximum quantity of air interface types that can be simultaneously configured or simultaneously run, but instead, capability information corresponding to each air interface type is defined for each air interface type of the target air interface types based on a parameter characteristic of each air interface type of the target air interface types, costs of the UE 10, a network condition, and the like.

It should be noted that, the sum of the capability information of all of the air interface types supported by the UE 10 may exceed the total capability information value of the UE 10, but it needs to be ensured that a sum of capability information corresponding to all of air interface types that the UE 10 simultaneously runs within a TTI cannot exceed the total capability information value of the UE 10.

Optionally, after 502, the method may further include 503 and 504. For details, refer to FIG. 5. For specific descriptions of 503 to 506 in FIG. 5, refer to 404 to 407 in FIG. 4. For brevity, details are not described herein again.

Therefore, in the method described in this aspect of this application, capability information of a flexible air interface is introduced, and a problem that a radio resource use manner cannot flexibly adapt to dynamic requirements of a service and a radio condition is resolved. The base station 20 determines the target capability information of the UE 10, so that the UE 10 can support a plurality of different air interface types on a same carrier. Therefore, the base station 20 may flexibly allocate a resource to the UE 10 between a plurality of air interface types based on the capability information of the UE 10 more flexibly, so as to more flexibly adapt to dynamic requirements of a service and a radio condition.

It should be understood that, sequence numbers of the foregoing processes do not indicate an execution sequence, and an execution sequence of processes shall be determined based on functions and internal logic thereof, and shall constitute no limitation on an implementation process of the aspects of this application.

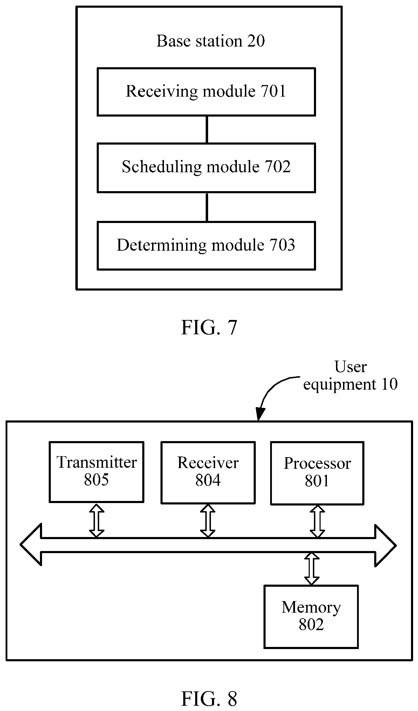

The forbidding methods according to the aspects of this application are described in detail above with reference to FIG. 2 to FIG. 5, and user equipment 10 and a base station 20 according to the aspects of this application are described in detail below with reference to FIG. 6 and FIG. 7.

FIG. 6 is a structural block diagram of user equipment 10 according to an aspect of this application. As shown in FIG. 6, the user equipment 10 includes a determining module 601 and a sending module 602.

The determining module 601 is configured to determine at least two of a plurality of air interface types supported by a same carrier as target air interface types.

The sending module 602 is configured to send air interface indication information to a base station 20 based on the target air interface types determined by the determining module 601, so that the base station schedules the UE 10 based on the target capability information.

Optionally, in another aspect, the air interface indication information includes target capability information corresponding to the target air interface types, and the target capability information is at least two pieces of capability information in a one-to-one correspondence with the at least two air interface types.

Before the UE sends the air interface indication information to the base station, the determining module 601 is further configured to:
determine the target capability information.

Therefore, the user equipment 10 described in this aspect of this application supports different air interface types to use a radio resource on a same cell by in a frequency division manner, and the UE 10 determines capability information corresponding to the different air interface types, so that the base station 20 may flexibly allocate a resource to the UE 10 between a plurality of air interface types based on the capability information, so as to more flexibly adapt to dynamic requirements of a service and a radio condition.

Optionally, in another aspect, the determining module 601 is specifically configured to:
determine the target capability information corresponding to the target air interface types based on a maximum quantity of air interface types that the UE 10 is capable of simultaneously configuring or simultaneously running and a total capability information value of the UE 10, where a quantity of the target air interface types is less than or equal to the maximum quantity of air interface types that the UE 10 is capable of simultaneously configuring or simultaneously running.

Optionally, in another aspect, the determining module 601 is specifically configured to:
averagely allocate the total capability information value based on the maximum quantity of air interface types that the UE 10 is capable of simultaneously configuring or simultaneously running, and determining a capability information value obtained after the average allocation as the target capability information corresponding to the target air interface types.

Optionally, in another aspect, the determining module 601 is specifically configured to:
determine the target capability information based on the maximum quantity of air interface types that the UE 10 is capable of simultaneously configuring or simultaneously running, the total capability information value of the UE 10, and at least one of the following information:
adaptive change information of the target air interface types, radio resources occupied by the target air interface types within each transmission time interval TTI, and capability requirement values of the target air interface types, where the adaptive change information is used to indicate whether the target air interface types support a dynamic capability information configuration and/or a semi-static capability information configuration.

FIG. 7 is a structural block diagram of a base station 20 according to an aspect of this application. As shown in FIG. 7, the base station 20 includes a receiving module 701 and a scheduling module 702.

The receiving module 701 is configured to receive air interface indication information sent by the UE 10, where the air interface indication information is determined by the UE 10 based on target air interface types, and the target air interface types include at least two of a plurality of air interface types supported by the UE on a same carrier.

The scheduling module 702 is configured to schedule the UE based on the air interface indication information received by the receiving module 701.

Optionally, in another aspect, the air interface indication information includes the target air interface types determined by the UE 10, the base station 20 further includes a determining module 703, and the determining module 703 is configured to:
determine target capability information corresponding to the target air interface types, where the target capability information is at least two pieces of capability information in a one-to-one correspondence with the at least two air interface types.

The scheduling module 702 is further configured to:
schedule the UE 10 based on the target capability information determined by the determining module 703.

Therefore, different air interface types supported by the UE 10 use a radio resource on a same cell by in a frequency division manner, and by determining capability information corresponding to the different air interface types supported by the UE 10, the base station 20 may flexibly allocate a resource to the UE 10 between a plurality of air interface types based on the capability information of the UE 10, so as to more flexibly adapt to dynamic requirements of a service and a radio condition.

Optionally, in another aspect, the receiving module 701 is further configured to:
receive capability indication information sent by the UE 10, where the capability indication information includes a maximum quantity of air interface types that the UE 10 is capable of simultaneously configuring or simultaneously running, and a total capability information value of the UE 10.

The determining module 703 is configured to:
determine the target capability information corresponding to the target air interface types based on a maximum quantity of air interface types that the UE 10 is capable of simultaneously configuring or simultaneously running and a total capability information value of the UE 10, where a quantity of the target air interface types is less than or equal to the maximum quantity of air interface types that the UE 10 is capable of simultaneously configuring or simultaneously running.

Optionally, in another aspect, the determining module 703 is further configured to:
averagely allocate the total capability information value based on the maximum quantity of air interface types that the UE 10 is capable of simultaneously configuring or simultaneously running, and determining a capability information value obtained after the average allocation as the target capability information corresponding to the target air interface types.

Optionally, in another aspect, the determining module 703 is further configured to:
determine the target capability information corresponding to the target air interface types based on the maximum quantity of air interface types that the UE 10 is capable of simultaneously configuring or simultaneously running, the total capability information value of the UE 10, and at least one of the following information:
adaptive change information of the target air interface types, radio resources occupied by the target air interface types within each transmission time interval TTI, and capability requirement values of the target air interface types, where the adaptive change information is used to indicate whether the target air interface types support a dynamic capability information configuration and/or a semi-static capability information configuration.

As shown in FIG. 8, an aspect of this application further provides user equipment 10. The user equipment 10 includes a processor 801, a memory 802, a receiver 804, and a transmitter 805. The processor 801, the memory 802, and the receiver 804 communicate with each other by using an internal connection path, so as to transmit a control signal and/or data, the memory 802 is configured to store an instruction, and the processor 801 is configured to execute the instruction stored in the memory 802, and control the receiver 804 to receive information. The processor 801, the memory 802, the receiver 804, and the transmitter 805 may be implemented by using one or more chips. For example, the processor 801, the memory 802, the receiver 804, and the transmitter 805 may all be integrated into one chip. Alternatively, the processor 801, the receiver 804, and the transmitter 805 may be integrated into one chip, and the memory 802 is integrated into another chip. A specific form is not limited herein. The processor 801 is configured to:
determine at least two of a plurality of air interface types supported by a same carrier as target air interface types.

The transmitter 805 is configured to send air interface indication information to a base station 20 based on the target air interface types, so that the base station 20 schedules the UE 10 based on the air interface indication information.

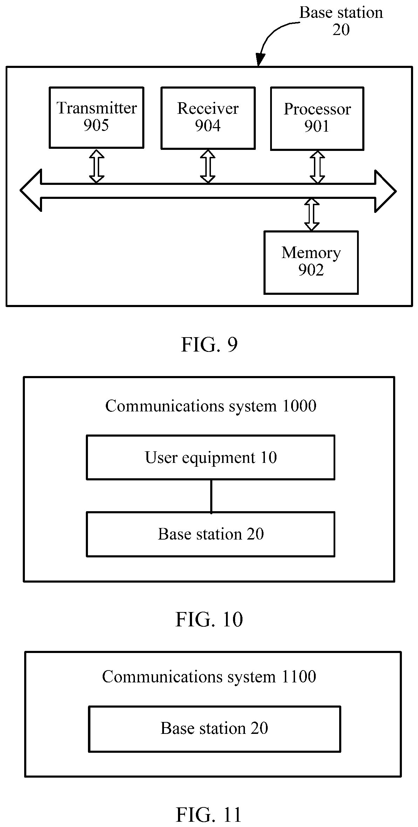

As shown in FIG. 9, an aspect of this application further provides a base station 20. The base station 20 includes a processor 901, a memory 902, a receiver 904, and a transmitter 905. The processor 901, the memory 902, and the receiver 904 communicate with each other by using an internal connection path, so as to transmit a control signal and/or data, the memory 902 is configured to store an instruction, and the processor 901 is configured to execute the instruction stored in the memory 902, and control the receiver 904 to receive information. The processor 901, the memory 902, the receiver 904, and the transmitter 905 may be implemented by using one or more chips. For example, the processor 901, the memory 902, the receiver 904, and the transmitter 905 may all be integrated into one chip. Alternatively, the processor 901, the receiver 904, and the transmitter 905 may be integrated into one chip, and the memory 902 is integrated into another chip. A specific form is not limited herein. The receiver 904 is configured to:
receive air interface indication information sent by UE 10, where the air interface indication information is determined by the UE 10 based on target air interface types, and the target air interface types include at least two of a plurality of air interface types supported by the UE 10 on a same carrier.

The processor 901 schedules the UE 10 based on the air interface indication information.

FIG. 10 is a schematic structural diagram of a communications system according to an aspect of this application. The communications system 1000 shown in FIG. 10 includes user equipment 10 and a base station 20.

FIG. 11 is a schematic structural diagram of a communications system according to an aspect of this application. The communications system 1100 shown in FIG. 11 includes a base station 20.

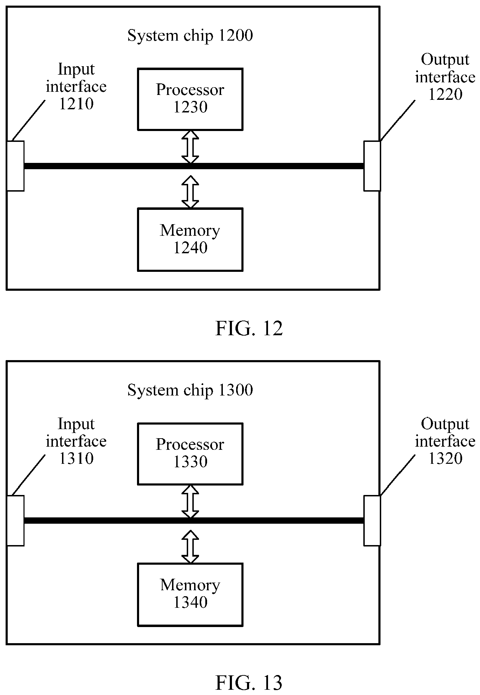

FIG. 12 is a schematic structural diagram of a system chip according to an aspect of this application. The system chip 1200 shown in FIG. 12 includes an input interface 1210, an output interface 1220, at least one processor 1230, and a memory 1240. The input interface 1210, the output interface 1220, the processor 1230, and the memory 1240 communicate with each other by using an internal connection path, the processor 1230 is configured to execute code in the memory 1240, and when the code is executed, the processor 1230 implements a method performed by the user equipment 10 in FIG. 2 to FIG. 5. The input interface 1210 and the output interface 1220 may alternatively be a same interface, and the interface may implement both a function of the input interface 1210 and a function of the output interface 1220.

FIG. 13 is a schematic structural diagram of a system chip according to an aspect of this application. The system chip 1300 shown in FIG. 13 includes an input interface 1310, an output interface 1320, at least one processor 1330, and a memory 1340. The input interface 1310, the output interface 1320, the processor 1330, and the memory 1340 communicate with each other by using an internal connection path, the processor 1330 is configured to execute code in the memory 1340, and when the code is executed, the processor 1330 may implement a method performed by the base station 20 in FIG. 2 to FIG. 5. The input interface 1310 and the output interface 1320 may alternatively be a same interface, and the interface may implement both a function of the input interface 1310 and a function of the output interface 1320.

It may be clearly understood by a person skilled in the art that, for the purpose of convenient and brief description, for a detailed working process of the foregoing system, apparatus, and unit, refer to a corresponding process in the foregoing method aspects, and details are not described herein again.

The memory in the aspects of the present disclosure may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DR RAM). The memory of the systems and methods described in this specification includes but is not limited to these and any memory of another proper type.

A person of ordinary skill in the art may be aware that, in combination with the examples described in the aspects disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several aspects provided in this application, it should be understood that the disclosed system, apparatus, and method may be implemented in other manners. For example, the described apparatus aspect is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the aspects.

In addition, functional units in the aspects of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the aspects of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A method for processing capability information of a mobile device, wherein the method comprises:
determining (210), by a mobile device, at least two of a plurality of air interface types supported by a same carrier as target air interface types, wherein the carrier is a cell established by a base station; and
sending (220), by the mobile device, air interface indication information to the base station based on the target air interface types, whereby the base station schedules the mobile device based on the air interface indication information; wherein the air interface indication information comprises target capability information corresponding to the target air interface types, and the target capability information is at least two pieces of capability information in a one-to-one correspondence with the at least two air interface types, and the method further comprises:
determining, by the mobile device, the target capability information.

2. The method according to claim 1, wherein the determining, by the mobile device, the target capability information comprises:
determining, by the mobile device, the target capability information based on a maximum quantity of air interface types that the mobile device is capable of simultaneously configuring or simultaneously running and a total capability information value of the mobile device, wherein a quantity of the target air interface types is less than or equal to the maximum quantity of air interface types that the mobile device is capable of simultaneously configuring or simultaneously running.

3. The method according to claim 2, wherein the determining, by the mobile device, the target capability information based on a maximum quantity of air interface types that the mobile device is capable of simultaneously configuring or simultaneously running and a total capability information value of the mobile device comprises:
determining, by the mobile device, the target capability information based on the maximum quantity of air interface types that the mobile device is capable of simultaneously configuring or simultaneously running, the total capability information value of the mobile device, and at least one of the following information:
adaptive change information of the target air interface types, radio resources occupied by the target air interface types within each transmission time interval TTI, and capability requirement values of the target air interface types, wherein the adaptive change information is used to indicate whether the target air interface types support a dynamic capability information configuration and/or a semi-static capability information configuration.

4. The method according to any one of claims 1 to 3, wherein the target capability information comprises at least one of the following:
a total quantity of uplink or downlink transport block bits within each TTI, a quantity of uplink or downlink spatial multiplexing layers of the mobile device, a quantity of soft channel bits of the mobile device within each TTI, a maximum modulation order supported by the mobile device, a total layer 2 buffer size of the mobile device, a physical layer parameter, a radio frequency parameter, and a maximum transmit power of the mobile device.

5. The method according to claim 1, wherein the air interface indication information comprises indication information used to indicate the target air interface types determined by the mobile device, and the method further comprises:
sending, by the mobile device, capability indication information to the base station, wherein the capability indication information comprises a maximum quantity of air interface types that the mobile device is capable of simultaneously configuring or simultaneously running, and a total capability information value of the mobile device.

6. A method for processing capability information of user equipment UE, wherein the method comprises:
receiving (310), by the base station, air interface indication information sent by the UE, wherein the air interface indication information is determined based on target air interface types, and the target air interface types comprise at least two of a plurality of air interface types supported by the UE on a same carrier, wherein the carrier is a cell established by the base station; and
scheduling (320), by the base station, the UE based on the air interface indication information;
wherein the air interface indication information comprises indication information used to indicate the target air interface types determined by the UE, wherein
the scheduling, by the base station, the UE based on the air interface indication information comprises:
determining, by the base station, target capability information corresponding to the target air interface types, wherein the target capability information is at least two pieces of capability information in a one-to-one correspondence with the at least two air interface types; and
scheduling, by the base station, the UE based on the target capability information.

7. The method according to claim 6, wherein the method further comprises:
receiving, by the base station, capability indication information sent by the UE, wherein the capability indication information comprises a maximum quantity of air interface types that the UE is capable of simultaneously configuring or simultaneously running, and a total capability information value of the UE, wherein
the determining, by the base station, target capability information corresponding to the target air interface types comprises:
determining, by the base station, the target capability information corresponding to the target air interface types based on a maximum quantity of air interface types that the UE is capable of simultaneously configuring or simultaneously running and a total capability information value of the UE, wherein a quantity of the target air interface types is less than or equal to the maximum quantity of air interface types that the UE is capable of simultaneously configuring or simultaneously running.

8. The method according to claim 7, wherein the determining, by the base station, the target capability information corresponding to the target air interface types based on a maximum quantity of air interface types that the UE is capable of simultaneously configuring or simultaneously running and a total capability information value of the UE comprises:
determining, by the base station, the target capability information corresponding to the target air interface types based on the maximum quantity of air interface types that the UE is capable of simultaneously configuring or simultaneously running, the total capability information value of the UE, and at least one of the following information:
adaptive change information of the target air interface types, radio resources occupied by the target air interface types within each transmission time interval TTI, and capability requirement values of the target air interface types, wherein the adaptive change information is used to indicate whether the target air interface types support a dynamic capability information configuration and/or a semi-static capability information configuration.

9. A mobile device, wherein the mobile device comprises:
a determining module (601), configured to determine at least two of a plurality of air interface types supported by a same carrier as target air interface types, wherein the carrier is a cell established by a base station; and
a sending module (602), configured to send air interface indication information to the base station based on the target air interface types determined by the determining module, whereby the base station schedules the mobile device based on the air interface indication information;
wherein the air interface indication information comprises target capability information corresponding to the target air interface types, and the target capability information is at least two pieces of capability information in a one-to-one correspondence with the at least two air interface types, and the determining module is further configured to determine the target capability information.

10. The mobile device according to claim 9, wherein the determining module is specifically configured to:
determine the target capability information based on a maximum quantity of air interface types that the mobile device is capable of simultaneously configuring or simultaneously running and a total capability information value of the mobile device, wherein a quantity of the target air interface types is less than or equal to the maximum quantity of air interface types that the mobile device is capable of simultaneously configures or simultaneously runs.

11. The mobile device according to claim 10, wherein the determining module is specifically configured to:
determine the target capability information corresponding to the target air interface types based on the maximum quantity of air interface types that the mobile device is capable of simultaneously configuring or simultaneously running, the total capability information value of the mobile device, and at least one of the following information:
adaptive change information of the target air interface types, radio resources occupied by the target air interface types within each transmission time interval TTI, and capability requirement values of the target air interface types, wherein the adaptive change information is used to indicate whether the target air interface types support a dynamic capability information configuration and/or a semi-static capability information configuration.

12. The mobile device according to claim 9, wherein the air interface indication information comprises indication information used to indicate the target air interface types determined by the mobile device, and the sending module is further configured to:
send capability indication information to the base station, wherein the capability indication information comprises a maximum quantity of air interface types that the mobile device is capable of simultaneously configuring or simultaneously running, and a total capability information value of the mobile device.

13. Abase station, wherein the base station comprises:
a receiving module (701), configured to receive air interface indication information sent by a mobile device, wherein the air interface indication information is determined based on target air interface types, and the target air interface types comprise at least two of a plurality of air interface types supported by the mobile device on a same carrier, wherein the carrier is a cell established by the base station; and
a scheduling module (702), configured to schedule the mobile device based on the air interface indication information received by the receiving module;
wherein the air interface indication information comprises indication information used to indicate the target air interface types determined by the mobile device,
the base station further comprises a determining module (703), and the determining module is configured to:
determine target capability information corresponding to the target air interface types, wherein the target capability information is at least two pieces of capability information in a one-to-one correspondence with the at least two air interface types; and
the scheduling module is further configured to:
schedule the mobile device based on the target capability information determined by the determining module.

14. The base station according to claim 13, wherein the receiving module is further configured to:
receive capability indication information sent by the mobile device, wherein the capability indication information comprises a maximum quantity of air interface types that the mobile device is capable of simultaneously configuring or simultaneously running, and a total capability information value of the mobile device, wherein
the determining module is specifically configured to:
determine the target capability information corresponding to the target air interface types based on a maximum quantity of air interface types that the mobile device is capable of simultaneously configuring or simultaneously running and a total capability information value of the mobile device, wherein a quantity of the target air interface types is less than or equal to the maximum quantity of air interface types that the mobile device is capable of simultaneously configures or simultaneously runs.

15. The base station according to claim 14, wherein the determining module is specifically configured to:
determine the target capability information corresponding to the target air interface types based on the maximum quantity of air interface types that the mobile device is capable of simultaneously configuring or simultaneously running, the total capability information value of the mobile device, and at least one of the following information:
adaptive change information of the target air interface types, radio resources occupied by the target air interface types within each transmission time interval TTI, and capability requirement values of the target air interface types, wherein the adaptive change information is used to indicate whether the target air interface types support a dynamic capability information configuration and/or a semi-static capability information configuration.

## Patentansprüche

1. Verfahren zum Verarbeiten von Fähigkeitsinformationen eines Mobilgeräts, wobei das Verfahren umfasst:
Bestimmen (210), durch ein Mobilgerät, von mindestens zwei von einer Vielzahl von Luftschnittstellentypen, die von demselben Träger als Zielluftschnittstellentypen unterstützt werden, wobei der Träger eine von einer Basisstation hergestellte Zelle ist; und
Senden (220), durch das Mobilgerät, von Luftschnittstellenanzeigeinformationen an die Basisstation basierend auf den Zielluftschnittstellentypen, wodurch die Basisstation das Mobilgerät basierend auf den Luftschnittstellenanzeigeinformationen plant; wobei die Luftschnittstellenanzeigeinformationen Zielfähigkeitsinformationen umfassen, die den Zielluftschnittstellentypen entsprechen, und die Zielfähigkeitsinformationen mindestens zwei Teile von Fähigkeitsinformationen in einer 1:1-Entsprechung mit den mindestens zwei Luftschnittstellentypen sind, und das Verfahren ferner umfasst: Bestimmen, durch das Mobilgerät, der Zielfähigkeitsinformationen.

2. Verfahren nach Anspruch 1, wobei das Bestimmen, durch das Mobilgerät, der Zielfähigkeitsinformationen umfasst:
Bestimmen, durch das Mobilgerät, der Zielfähigkeitsinformationen basierend auf einer maximalen Anzahl von Luftschnittstellentypen, die das Mobilgerät gleichzeitig konfigurieren oder gleichzeitig ausführen kann, und eines Gesamtfähigkeitsinformationswerts des Mobilgeräts, wobei eine Anzahl der Zielluftschnittstellentypen kleiner oder gleich der maximalen Anzahl von Luftschnittstellentypen ist, die das Mobilgerät gleichzeitig konfigurieren oder gleichzeitig ausführen kann.

3. Verfahren nach Anspruch 2, wobei das Bestimmen, durch das Mobilgerät, der Zielfähigkeitsinformationen basierend auf einer maximalen Anzahl von Luftschnittstellentypen, die das Mobilgerät gleichzeitig konfigurieren oder gleichzeitig ausführen kann, und eines Gesamtfähigkeitsinformationswerts des Mobilgeräts umfasst:
Bestimmen, durch das Mobilgerät, der Zielfähigkeitsinformationen basierend auf der maximalen Anzahl von Luftschnittstellentypen, die das Mobilgerät gleichzeitig konfigurieren oder gleichzeitig ausführen kann, des Gesamtfähigkeitsinformationswerts des Mobilgeräts und mindestens einer der folgenden Informationen:
adaptive Änderungsinformationen der Zielluftschnittstellentypen, Funkressourcen, die von den Zielluftschnittstellentypen innerhalb jedes Übertragungszeitintervalls ("Transmission Time Interval", TTI) belegt werden, und Fähigkeitsanforderungswerte der Zielluftschnittstellentypen, wobei die adaptiven Änderungsinformationen verwendet werden, um anzuzeigen, ob die Zielluftschnittstellentypen eine dynamische Fähigkeitsinformationenkonfiguration und/oder eine semistatische Fähigkeitsinformationenkonfiguration unterstützen.

4. Verfahren nach einem der Ansprüche 1 bis 3, wobei die Zielfähigkeitsinformationen mindestens eines der Folgenden umfassen:
eine Gesamtanzahl von Uplink- oder Downlink-Transportblockbits innerhalb jedes TTI, eine Anzahl von Uplink- oder Downlink-Raummultiplexschichten des Mobilgeräts, eine Anzahl von Soft-Kanal-Bits des Mobilgeräts innerhalb jedes TTI, eine von dem Mobilgerät unterstützte maximale Modulationsreihenfolge, eine Gesamtpuffergröße der Schicht 2 des Mobilgeräts, einen Parameter der physischen Schicht, einen Funkfrequenzparameter und eine maximale Übertragungsleistung des Mobilgeräts.

5. Verfahren nach Anspruch 1, wobei die Luftschnittstellenanzeigeinformationen Anzeigeinformationen umfassen, die zum Anzeigen der von dem Mobilgerät bestimmten Zielluftschnittstellentypen verwendet werden, und das Verfahren ferner umfasst:
Senden, durch das Mobilgerät, von Fähigkeitsanzeigeinformationen an die Basisstation, wobei die Fähigkeitsanzeigeinformationen eine maximale Anzahl von Luftschnittstellentypen, die das Mobilgerät gleichzeitig konfigurieren oder gleichzeitig ausführen kann, und einen Gesamtfähigkeitsinformationswert des Mobilgeräts umfassen.

6. Verfahren zum Verarbeiten von Fähigkeitsinformationen eines Endgeräts ("User Equipment", UE), wobei das Verfahren umfasst:
Empfangen (310), durch die Basisstation, von Luftschnittstellenanzeigeinformationen, die von dem UE gesendet wurden, wobei die Luftschnittstellenanzeigeinformationen basierend auf Zielluftschnittstellentypen bestimmt werden und die Zielluftschnittstellentypen mindestens zwei von einer Vielzahl von Luftschnittstellentypen umfassen, die von dem UE auf demselben Träger unterstützt werden, wobei der Träger eine von einer Basisstation hergestellte Zelle ist; und
Planen (320), durch die Basisstation, des UE basierend auf der Luftschnittstellenanzeigeinformation; wobei die Luftschnittstellenanzeigeinformationen Anzeigeinformationen umfassen, die zum Anzeigen der von dem UE bestimmten Zielluftschnittstellentypen verwendet werden, wobei
das Planen, durch die Basisstation, des UE basierend auf der Luftschnittstellenanzeigeinformation, umfasst:
Bestimmen, durch die Basisstation, von Zielfähigkeitsinformationen, die den Zielluftschnittstellentypen entsprechen, wobei die Zielfähigkeitsinformationen mindestens zwei Teile von Fähigkeitsinformationen in einer 1:1-Entsprechung mit den mindestens zwei Luftschnittstellentypen sind; und
Planen, durch die Basisstation, des UE basierend auf den Zi elfähigkei tsinformationen.

7. Verfahren nach Anspruch 6, wobei das Verfahren ferner umfasst:
Empfangen, durch die Basisstation, von Fähigkeitsanzeigeinformationen, die von dem UE gesendet wurden, wobei die Fähigkeitsanzeigeinformationen eine maximale Anzahl von Luftschnittstellentypen, die das UE gleichzeitig konfigurieren oder gleichzeitig ausführen kann, und einen Gesamtfähigkeitsinformationswert des UE umfassen, wobei
das Bestimmen, durch die Basisstation, von Zielfähigkeitsinformationen, die den Zielluftschnittstellentypen entsprechen, umfasst:
Bestimmen, durch die Basisstation, der den Zielluftschnittstellentypen entsprechenden Zielfähigkeitsinformationen basierend auf einer maximalen Anzahl von Luftschnittstellentypen, die das UE gleichzeitig konfigurieren oder gleichzeitig ausführen kann, und eines Gesamtfähigkeitsinformationswerts des UE, wobei eine Anzahl der Zielluftschnittstellentypen kleiner oder gleich der maximalen Anzahl von Luftschnittstellentypen ist, die das UE gleichzeitig konfigurieren oder gleichzeitig ausführen kann.

8. Verfahren nach Anspruch 7, wobei das Bestimmen, durch die Basisstation, der den Zielluftschnittstellentypen entsprechenden Zielfähigkeitsinformationen basierend auf einer maximalen Anzahl von Luftschnittstellentypen, die das UE gleichzeitig konfigurieren oder gleichzeitig ausführen kann, und eines Gesamtfähigkeitsinformationswerts des UE umfasst:
Bestimmen, durch die Basisstation, der den Zielluftschnittstellentypen entsprechenden Zielfähigkeitsinformationen basierend auf der maximalen Anzahl von Luftschnittstellentypen, die das UE gleichzeitig konfigurieren oder gleichzeitig ausführen kann, des Gesamtfähigkeitsinformationswerts des UE und mindestens einer der folgenden Informationen:
adaptive Änderungsinformationen der Zielluftschnittstellentypen, Funkressourcen, die von den Zielluftschnittstellentypen innerhalb jedes Übertragungszeitintervalls ("Transmission Time Interval", TTI) belegt werden, und Fähigkeitsanforderungswerte der Zielluftschnittstellentypen, wobei die adaptiven Änderungsinformationen verwendet werden, um anzuzeigen, ob die Zielluftschnittstellentypen eine dynamische Fähigkeitsinformationenkonfiguration und/oder eine semistatische Fähigkeitsinformationenkonfiguration unterstützen.

9. Mobilgerät, wobei das Mobilgerät umfasst:
ein Bestimmungsmodul (601), das konfiguriert ist, um mindestens zwei von einer Vielzahl von Luftschnittstellentypen zu bestimmen, die von demselben Träger als Zielluftschnittstellentypen unterstützt werden, wobei der Träger eine von einer Basisstation hergestellte Zelle ist; und
ein Sendemodul (602), das konfiguriert ist, um Luftschnittstellenanzeigeinformationen an die Basisstation basierend auf den von dem Bestimmungsmodul bestimmten Zielluftschnittstellentypen zu senden, wobei die Basisstation das Mobilgerät basierend auf den Luftschnittstellenanzeigeinformationen plant;
wobei die Luftschnittstellenanzeigeinformationen Zielfähigkeitsinformationen umfassen, die den Zielluftschnittstellentypen entsprechen, und die Zielfähigkeitsinformationen mindestens zwei Teile von Fähigkeitsinformationen in einer 1:1-Entsprechung mit den mindestens zwei Luftschnittstellentypen sind, und das Bestimmungsmodul ferner konfiguriert ist, um die Zielfähigkeitsinformationen zu bestimmen.

10. Mobilvorrichtung nach Anspruch 9, wobei das Bestimmungsmodul insbesondere konfiguriert ist, um:
die Zielfähigkeitsinformationen basierend auf einer maximalen Anzahl von Luftschnittstellentypen, die das Mobilgerät gleichzeitig konfigurieren oder gleichzeitig ausführen kann, und eines Gesamtfähigkeitsinformationswerts des Mobilgeräts zu bestimmen, wobei eine Anzahl der Zielluftschnittstellentypen kleiner oder gleich der maximalen Anzahl von Luftschnittstellentypen ist, die das Mobilgerät gleichzeitig konfiguriert oder gleichzeitig ausführt.

11. Mobilgerät nach Anspruch 10, wobei das Bestimmungsmodul insbesondere konfiguriert ist, um:
die den Zielluftschnittstellentypen entsprechenden Zielfähigkeitsinformationen basierend auf der maximalen Anzahl von Luftschnittstellentypen, die das Mobilgerät gleichzeitig konfigurieren oder gleichzeitig ausführen kann, den Gesamtfähigkeitsinformationswert des Mobilgeräts und mindestens eine der folgenden Informationen zu bestimmen:
adaptive Änderungsinformationen der Zielluftschnittstellentypen, Funkressourcen, die von den Zielluftschnittstellentypen innerhalb jedes Übertragungszeitintervalls ("Transmission Time Interval", TTI) belegt werden, und Fähigkeitsanforderungswerte der Zielluftschnittstellentypen, wobei die adaptiven Änderungsinformationen verwendet werden, um anzuzeigen, ob die Zielluftschnittstellentypen eine dynamische Fähigkeitsinformationenkonfiguration und/oder eine semistatische Fähigkeitsinformationenkonfiguration unterstützen.

12. Mobilgerät nach Anspruch 9, wobei die Luftschnittstellenanzeigeinformationen Anzeigeinformationen umfassen, die zum Anzeigen der von dem Mobilgerät bestimmten Zielluftschnittstellentypen verwendet werden, und das Sendemodul ferner konfiguriert ist, um:
Fähigkeitsanzeigeinformationen an die Basisstation zu senden, wobei die Fähigkeitsanzeigeinformationen eine maximale Anzahl von Luftschnittstellentypen, die das Mobilgerät gleichzeitig konfigurieren oder gleichzeitig ausführen kann, und einen Gesamtfähigkeitsinformationswert des Mobilgeräts umfassen.

13. Basisstation, wobei die Basisstation umfasst:
ein Empfangsmodul (701), das konfiguriert ist, um Luftschnittstellenanzeigeinformationen zu empfangen, die von dem Mobilgerät gesendet wurden, wobei die Luftschnittstellenanzeigeinformationen basierend auf Zielluftschnittstellentypen bestimmt werden und die Zielluftschnittstellentypen mindestens zwei von einer Vielzahl von Luftschnittstellentypen umfassen, die von dem Mobilgerät auf demselben Träger unterstützt werden, wobei der Träger eine von einer Basisstation hergestellte Zelle ist; und
ein Planungsmodul (702), das konfiguriert ist, um das Mobilgerät basierend auf den von dem Empfangsmodul empfangenen Luftschnittstellenanzeigeinformationen zu planen;
wobei die Luftschnittstellenanzeigeinformationen Anzeigeinformationen umfassen, die zum Anzeigen der von dem Mobilgerät bestimmten Zielluftschnittstellentypen verwendet werden,
die Basisstation ferner ein Bestimmungsmodul (703) umfasst, und das Bestimmungsmodul konfiguriert ist, um:
Zielfähigkeitsinformationen zu bestimmen, die den Zielluftschnittstellentypen entsprechen, wobei die Zielfähigkeitsinformationen mindestens zwei Teile von Fähigkeitsinformationen in einer 1:1-Entsprechung mit den mindestens zwei Luftschnittstellentypen sind; und
das Planungsmodul ferner konfiguriert ist, um:
das Mobilgerät basierend auf den vom Bestimmungsmodul bestimmten Zielfähigkeitsinformationen zu planen.

14. Basisstation nach Anspruch 13, wobei das Empfangsmodul ferner konfiguriert ist, um:
von dem Mobilgerät gesendete Fähigkeitsanzeigeinformationen zu empfangen, wobei die Fähigkeitsanzeigeinformationen eine maximale Anzahl von Luftschnittstellentypen, die das Mobilgerät gleichzeitig konfigurieren oder gleichzeitig ausführen kann, und einen Gesamtfähigkeitsinformationswert des Mobilgeräts umfassen, wobei
das Bestimmungsmodul insbesondere konfiguriert ist, um:
die den Zielluftschnittstellentypen entsprechenden Zielfähigkeitsinformationen basierend auf einer maximalen Anzahl von Luftschnittstellentypen, die das Mobilgerät gleichzeitig konfigurieren oder gleichzeitig ausführen kann, und einen Gesamtfähigkeitsinformationswert des Mobilgeräts zu bestimmen, wobei eine Anzahl der Zielluftschnittstellentypen kleiner oder gleich der maximalen Anzahl von Luftschnittstellentypen ist, die das Mobilgerät gleichzeitig konfiguriert oder gleichzeitig ausführt.

15. Basisstation nach Anspruch 14, wobei das Bestimmungsmodul insbesondere konfiguriert ist, um:
die den Zielluftschnittstellentypen entsprechenden Zielfähigkeitsinformationen basierend auf der maximalen Anzahl von Luftschnittstellentypen, die das Mobilgerät gleichzeitig konfigurieren oder gleichzeitig ausführen kann, den Gesamtfähigkeitsinformationswert des Mobilgeräts und mindestens eine der folgenden Informationen zu bestimmen:
adaptive Änderungsinformationen der Zielluftschnittstellentypen, Funkressourcen, die von den Zielluftschnittstellentypen innerhalb jedes Übertragungszeitintervalls ("Transmission Time Interval", TTI) belegt werden, und Fähigkeitsanforderungswerte der Zielluftschnittstellentypen, wobei die adaptiven Änderungsinformationen verwendet werden, um anzuzeigen, ob die Zielluftschnittstellentypen eine dynamische Fähigkeitsinformationenkonfiguration und/oder eine semistatische Fähigkeitsinformationenkonfiguration unterstützen.

## Revendications

1. Procédé pour traiter des informations de capacité d'un dispositif mobile, le procédé consistant :
à déterminer (210), au moyen d'un dispositif mobile, au moins deux types d'interface radio d'une pluralité de types d'interface radio pris en charge par une même porteuse en tant que types d'interface radio cibles, dans lequel la porteuse est une cellule établie par une station de base ; et
à envoyer (220), au moyen du dispositif mobile, des informations d'indication d'interface radio à la station de base en se basant sur les types d'interface radio cibles, grâce à quoi la station de base planifie le dispositif mobile en se basant sur les informations d'indication d'interface radio ; dans lequel les informations d'indication d'interface radio comportent des informations de capacité cible correspondant aux types d'interface radio cibles et les informations de capacité cible constituent au moins deux éléments d'informations de capacité dans une correspondance biunivoque avec les au moins deux types d'interface radio et le procédé consistant en outre :
à déterminer, au moyen du dispositif mobile, les informations de capacité cible.

2. Procédé selon la revendication 1, dans lequel la détermination, par le dispositif mobile, des informations de capacité cible consiste :
à déterminer, au moyen du dispositif mobile, les informations de capacité cible en se basant sur une quantité maximale de types d'interface radio que le dispositif mobile est capable de configurer en même temps ou de faire fonctionner en même temps, et sur une valeur d'informations de capacité totale du dispositif mobile, dans lequel une quantité de types d'interface radio cibles est inférieure ou égale à la quantité maximale de types d'interface radio que le dispositif mobile est capable de configurer en même temps ou de faire fonctionner en même temps.

3. Procédé selon la revendication 2, dans lequel la détermination, par le dispositif mobile, des informations de capacité cible en se basant sur une quantité maximale de types d'interface radio que le dispositif mobile est capable de configurer en même temps ou de faire fonctionner en même temps et sur une valeur d'informations de capacité totale du dispositif mobile, consiste :
à déterminer, au moyen du dispositif mobile, les informations de capacité cible en se basant sur la quantité maximale de types d'interface radio que le dispositif mobile est capable de configurer en même temps ou de faire fonctionner en même temps, sur la valeur d'informations de capacité totale du dispositif mobile et sur au moins l'une des informations suivantes :
des informations de changement adaptatif des types d'interface radio cibles, des ressources radio occupées par les types d'interface radio cibles pendant chaque intervalle de temps de transmission (TTI) et des valeurs de besoin de capacité des types d'interface radio cibles, dans lequel les informations de changement adaptatif sont utilisées pour indiquer si les types d'interface radio cibles prennent en charge une configuration d'informations de capacité dynamique et/ou une configuration d'informations de capacité semi-statique.

4. Procédé selon l'une quelconque des revendications 1 à 3, dans lequel les informations de capacité cible comprennent au moins l'un des éléments suivants :
une quantité totale de bits de bloc de transport de liaison montante ou de liaison descendante pendant chaque intervalle TTI, une quantité de couches de multiplexage spatial de liaison montante ou de liaison descendante du dispositif mobile, une quantité de bits de canal souples du dispositif mobile pendant chaque intervalle TTI, un ordre de modulation maximale pris en charge par le dispositif mobile, une taille de mémoire tampon de couche 2 totale du dispositif mobile, un paramètre de couche physique, un paramètre de fréquence radio et une puissance de transmission maximale du dispositif mobile.

5. Procédé selon la revendication 1, dans lequel les informations d'indication d'interface radio comportent des informations d'indication utilisées pour indiquer les types d'interface radio cibles déterminés par le dispositif mobile et le procédé consistant en outre :
à envoyer, au moyen du dispositif mobile, des informations d'indication de capacité à la station de base, dans lequel les informations d'indication de capacité comprennent une quantité maximale de types d'interface radio que le dispositif mobile est capable de configurer en même temps ou de faire fonctionner en même temps, et une valeur d'informations de capacité totale du dispositif mobile.

6. Procédé pour traiter des informations de capacité d'un équipement utilisateur (UE), le procédé consistant :
à recevoir (310), au moyen de la station de base, des informations d'indication d'interface radio envoyées par l'équipement utilisateur, dans lequel les informations d'indication d'interface radio sont déterminées en se basant sur des types d'interface radio cibles et les types d'interface radio cibles comprennent au moins deux types d'interface radio d'une pluralité de types d'interface radio pris en charge par l'équipement utilisateur sur une même porteuse, dans lequel la porteuse est une cellule établie par la station de base ; et
à planifier (320), au moyen de la station de base, l'équipement utilisateur en se basant sur les informations d'indication d'interface radio ;
dans lequel les informations d'indication d'interface radio comportent des informations d'indication utilisées pour indiquer les types d'interface radio cibles déterminés par l'équipement utilisateur, dans lequel
la planification, par la station de base, de l'équipement utilisateur en se basant sur les informations d'indication d'interface radio consiste :
à déterminer, au moyen de la station de base, des informations de capacité cible correspondant aux types d'interface radio cibles, dans lequel les informations de capacité cible constituent au moins deux éléments d'informations de capacité dans une correspondance biunivoque avec les au moins deux types d'interface radio ; et
à planifier, au moyen de la station de base, l'équipement utilisateur en se basant sur les informations de capacité cible.

7. Procédé selon la revendication 6, le procédé consistant en outre :
à recevoir, au moyen de la station de base, des informations d'indication de capacité envoyées par l'équipement utilisateur, dans lequel les informations d'indication de capacité comprennent une quantité maximale de types d'interface radio que l'équipement utilisateur est capable de configurer en même temps ou de faire fonctionner en même temps, et une valeur d'informations de capacité totale de l'équipement utilisateur, dans lequel
la détermination, par la station de base, d'informations de capacité cible correspondant aux types d'interface radio cibles consiste :
à déterminer, au moyen de la station de base, les informations de capacité cible correspondant aux types d'interface radio cibles en se basant sur une quantité maximale de types d'interface radio que l'équipement utilisateur est capable de configurer en même temps ou de faire fonctionner en même temps, et sur une valeur d'informations de capacité totale de l'équipement utilisateur, dans lequel une quantité de types d'interface radio cibles est inférieure ou égale à la quantité maximale de types d'interface radio que l'équipement utilisateur est capable de configurer en même temps ou de faire fonctionner en même temps.

8. Procédé selon la revendication 7, dans lequel la détermination, par la station de base, des informations de capacité cible correspondant aux types d'interface radio cibles en se basant sur une quantité maximale de types d'interface radio que l'équipement utilisateur est capable de configurer en même temps ou de faire fonctionner en même temps, et sur une valeur d'informations de capacité totale de l'équipement utilisateur, consiste :
à déterminer, au moyen de la station de base, les informations de capacité cible correspondant aux types d'interface radio cibles en se basant sur la quantité maximale de types d'interface radio que l'équipement utilisateur est capable de configurer en même temps ou de faire fonctionner en même temps, sur la valeur d'informations de capacité totale de l'équipement utilisateur, et sur au moins l'une des informations suivantes :
des informations de changement adaptatif des types d'interface radio cibles, des ressources radio occupées par les types d'interface radio cibles pendant chaque intervalle de temps de transmission (TTI) et des valeurs de besoin de capacité des types d'interface radio cibles, dans lequel les informations de changement adaptatif sont utilisées pour indiquer si les types d'interface radio cibles prennent en charge une configuration d'informations de capacité dynamique et/ou une configuration d'informations de capacité semi-statique.

9. Dispositif mobile, le dispositif mobile comprenant :
un module de détermination (601), configuré pour déterminer au moins deux types d'interface radio d'une pluralité de types d'interface radio pris en charge par une même porteuse en tant que types d'interface radio cibles, dans lequel la porteuse est une cellule établie par une station de base ; et
un module d'envoi (602), configuré pour envoyer des informations d'indication d'interface radio à la station de base en se basant sur les types d'interface radio cibles déterminés par le module de détermination, grâce à quoi la station de base planifie le dispositif mobile en se basant sur les informations d'indication d'interface radio ;
dans lequel les informations d'indication d'interface radio comportent des informations de capacité cible correspondant aux types d'interface radio cibles et les informations de capacité cible constituent au moins deux éléments d'informations de capacité dans une correspondance biunivoque avec les au moins deux types d'interface radio et le module de détermination est en outre configuré pour déterminer les informations de capacité cible.

10. Dispositif mobile selon la revendication 9, dans lequel le module de détermination est spécialement configuré :
pour déterminer les informations de capacité cible en se basant sur une quantité maximale de types d'interface radio que le dispositif mobile est capable de configurer en même temps ou de faire fonctionner en même temps, et sur une valeur d'informations de capacité totale du dispositif mobile, dans lequel une quantité de types d'interface radio cibles est inférieure ou égale à la quantité maximale de types d'interface radio que le dispositif mobile est capable de configurer en même temps ou de faire fonctionner en même temps.

11. Dispositif mobile selon la revendication 10, dans lequel le module de détermination est spécialement configuré :
pour déterminer les informations de capacité cible correspondant aux types d'interface radio cibles en se basant sur la quantité maximale de types d'interface radio que le dispositif mobile est capable de configurer en même temps ou de faire fonctionner en même temps, sur la valeur d'informations de capacité totale du dispositif mobile et sur au moins l'une des informations suivantes :
des informations de changement adaptatif des types d'interface radio cibles, des ressources radio occupées par les types d'interface radio cibles pendant chaque intervalle de temps de transmission (TTI) et des valeurs de besoin de capacité des types d'interface radio cibles, dans lequel les informations de changement adaptatif sont utilisées pour indiquer si les types d'interface radio cibles prennent en charge une configuration d'informations de capacité dynamique et/ou une configuration d'informations de capacité semi-statique.

12. Dispositif mobile selon la revendication 9, dans lequel les informations d'indication d'interface radio comportent des informations d'indication utilisées pour indiquer les types d'interface radio cibles déterminés par le dispositif mobile et le module d'envoi est en outre configuré :
pour envoyer des informations d'indication de capacité à la station de base, dans lequel les informations d'indication de capacité comprennent une quantité maximale de types d'interface radio que le dispositif mobile est capable de configurer en même temps ou de faire fonctionner en même temps, et une valeur d'informations de capacité totale du dispositif mobile.

13. Station de base, la station de base comprenant :
un module de réception (701), configuré pour recevoir des informations d'indication d'interface radio envoyées par un dispositif mobile, dans laquelle les informations d'indication d'interface radio sont déterminées en se basant sur des types d'interface radio cibles et les types d'interface radio cibles comprennent au moins deux types d'interface radio d'une pluralité de types d'interface radio pris en charge par le dispositif mobile sur une même porteuse, dans laquelle la porteuse est une cellule établie par la station de base ; et
un module de planification (702), configuré pour planifier le dispositif mobile en se basant sur les informations d'indication d'interface radio reçues par le module de réception ;
dans laquelle les informations d'indication d'interface radio comportent des informations d'indication utilisées pour indiquer les types d'interface radio cibles déterminés par le dispositif mobile,
la station de base comprenant en outre un module de détermination (703) et le module de détermination étant configuré :
pour déterminer des informations de capacité cible correspondant aux types d'interface radio cibles, dans laquelle les informations de capacité cible constituent au moins deux éléments d'informations de capacité dans une correspondance biunivoque avec les au moins deux types d'interface radio ; et
le module de planification étant en outre configuré :
pour planifier le dispositif mobile en se basant sur les informations de capacité cible déterminées par le module de détermination.

14. Station de base selon la revendication 13, dans laquelle le module de réception est en outre configuré :
pour recevoir des informations d'indication de capacité envoyées par le dispositif mobile, dans laquelle les informations d'indication de capacité comprennent une quantité maximale de types d'interface radio que le dispositif mobile est capable de configurer en même temps ou de faire fonctionner en même temps, et une valeur d'informations de capacité totale du dispositif mobile, dans laquelle le module de détermination est spécialement configuré :
pour déterminer les informations de capacité cible correspondant aux types d'interface radio cibles en se basant sur une quantité maximale de types d'interface radio que le dispositif mobile est capable de configurer en même temps ou de faire fonctionner en même temps, et sur une valeur d'informations de capacité totale du dispositif mobile, dans laquelle une quantité de types d'interface radio cibles est inférieure ou égale à la quantité maximale de types d'interface radio que le dispositif mobile est capable de configurer en même temps ou de faire fonctionner en même temps.

15. Station de base selon la revendication 14, dans laquelle le module de détermination est spécialement configuré :
pour déterminer les informations de capacité cible correspondant aux types d'interface radio cibles en se basant sur la quantité maximale de types d'interface radio que le dispositif mobile est capable de configurer en même temps ou de faire fonctionner en même temps, sur la valeur d'informations de capacité totale du dispositif mobile et sur au moins l'une des informations suivantes :
des informations de changement adaptatif des types d'interface radio cibles, des ressources radio occupées par les types d'interface radio cibles pendant chaque intervalle de temps de transmission (TTI) et des valeurs de besoin de capacité des types d'interface radio cibles, dans laquelle les informations de changement adaptatif sont utilisées pour indiquer si les types d'interface radio cibles prennent en charge une configuration d'informations de capacité dynamique et/ou une configuration d'informations de capacité semi-statique.
